# EUROPÄISCHE PATENTSCHRIFT

(11) **EP 0 865 837 B1**
(45) Veröffentlichungstag und Bekanntmachung des Hinweises auf die Patenterteilung: **28.08.2002**
(21) Anmeldenummer: 98104758.2
(22) Anmeldetag: 17.03.1998
(51) Int. Cl.: B21B 35/14

(54) **Walzwerksantrieb mit Zahngelenkspindeln und mit einer Vorrichtung zur Umlaufschmierung**
Rolling mill drive with spindles having a toothed joint and with a device for circular lubrication
Entraînement pour laminoir comprenant des broches articulées à joint denté et un dispositif de graissage par circulation

(30) Priorität: 20.03.1997 DE 19711609
(43) Veröffentlichungstag der Anmeldung: 23.09.1998
(73) Patentinhaber: SMS Demag AG, 40237 Düsseldorf (DE)
(72) Erfinder: Seidl, Karl-Heinz, 57271 Hilchenbach (DE); Kühn, Helmut, 57223 Kreuztal (DE)
(74) Vertreter: Valentin, Ekkehard, Dipl.-Ing.

(56) Entgegenhaltungen:
- EP-A- 0 324 168
- DE-A- 1 902 894
- DE-A- 2 811 607
- DE-A- 3 706 577
- DE-A- 4 035 941
- US-A- 3 070 979
- "OIL LUBRICATION LENGTHENS GEAR-SPINDLE LIFE" MACHINE DESIGN, Bd. 64, Nr. 14, 9. Juli 1992, Seite 31 XP000310220

## Beschreibung

Die Erfindung betrifft einen Walzwerksantrieb mit zwischen antreibbaren Walzen und deren Getrieben angeordneten, mit einer Vorrichtung für deren Umlaufschmierung versehenen Zahngelenkspindeln, die jeweils einen an eine ölzufuhr anschließbaren genuteten ölzuführungsring aufweisen, von dem aus öl durch einen Zentralkanal des Spindelschaftes den Zahngelenken zuführbar ist, sowie mit einem ortsfesten, der ölabfuhr dienenden und den Spindelschaft im Abstand umgebenden Gehäuse, und mit einer druckseitig an die ölzuführungsringe anschließbaren, mit einem ölkühler zusammenwirkbaren ölförderpumpe.

Beim Walzen vergleichsweise dünner und breiter Bänder ist es erforderlich, zur Korrektur auftretender Planheitsfehler des gewalzten Gutes beispielsweise die Arbeitswalzen im Walzgerüst um bestimmte Stellbereiche axial zu verschieben und fallweise dabei auch die Breite des Walzspaltes entsprechend unterschiedlichen Walzprogrammen einzustellen. Zu diesem Zweck bewirkt ein Stellantrieb die axiale Verschiebung der Arbeitswalzen um exakt vorgegebene Beträge im Walzgerüst, während der rotatorische Antrieb der Arbeitswalzen in bekannter Weise über Zahngelenkspindeln erfolgt, die zwischen den antreibbaren Arbeitswalzen und antreibenden Getriebeeinheiten mit Antriebsmotoren in Verbindung stehen. Dabei müssen die Zahngelenkspindeln so ausgebildet sein, dass sie einerseits die axiale und höheneinstellbare Verlagerung der Arbeitswalzen im Walzgerüst ausgleichen, und andererseits die volle Antriebsleistung z. B. von Kammwalzen auf die Arbeitswalzen übertragen. Die dabei miteinander zusammenwirkenden Kupplungstreffer in den Teilnutverzahnungen unterliegen hohen Reibungskräften mit Wärmeentwicklung und müssen zur Verringerung der Gleitreibung und der Temperaturerhöhung ständig mit Schmiermittel versorgt werden. Zum Zwecke der einwandfreien Schmierung und Kühlung der Zahngelenke ist es beim Stand der Technik üblich, eine ölumlaufschmierung vorzusehen, die einerseits eine einwandfreie Versorgung aller Schmierstellen der Zahngelenke mit Schmiermittel sicherstellt, und darüber hinaus für die erforderliche Abfuhr der Reibungswärme aus den Zahngelenken sorgt.

Aus der EP 0 324 168 B1 ist ein Walzwerksantrieb mit zwischen Antriebswellen und angetriebenen Walzen zwischen Abtriebszapfen von Kammwalzen und Antriebszapfen der Walzen angeordneten, axial verschiebbaren Zahngelenkspindeln bekannt. An deren Spindelkopf ist jeweils ein eine Bogenverzahnung aufweisender Kupplungstreffer und eine diesen Treffer umgreifende, mit Innenverzahnung versehende Kupplungshülse angeordnet, die ihrerseits mit einem Antriebsgetriebezapfen bzw. mit einem Walzenzapfen verbunden ist. Für diese Antriebsanordnung ist eine Ölumlaufschmierung vorgesehen, bei der in einem ortsfesten Ölgehäuse ein Ölzuführungsring angeordnet ist, der die Spindelwelle umfasst und der auf der der Spindelwelle zugewandten Seite eine innenliegende Ringnut hat, die in offener Verbindung mit einem zur Spindelachse führenden Ölkanal steht. Dieser Ölkanal mündet in einen achsmittig angeordneten Zentralkanal, aus dem heraus die Zahngelenke in geeigneter Weise mit Schmieröl versorgt werden. An den beidseitigen Spindelköpfen befinden sich Ölsammelräume, die mit jeweils einem auf der Kupplungshülse drehbar gelagerten Ölgehäuse verbunden sind, wozu die drehende Kupplungshülse eine Labyrinthdichtung aufweist, deren andere Dichtungselemente mit dem Gehäuse verbunden sind.

Bei einem Walzenwechsel müssen zumindest die walzgerüstseitigen Spindelköpfe aus der walzenseitigen Kupplungshülse entfernt werden, was wegen des dort vorhandenen Ölgehäuses mit Labyrinthdichtungen eine sehr arbeitsaufwendige Montage verursacht. Darüber hinaus ist während des Betriebes eine Ölverschmutzung unvermeidlich, wobei z. B. durch die Labyrinthdichtungen nach vorliegender Erfahrung Wasser/Emulsions-Kühlflüssigkeit in die ölauffanggehäuse gelangen kann.

Aus der DE 1 902 894 ist eine Zahngelenkspindel für Walzwerksantriebe mit einer Vorrichtung zur Umlaufschmierung bekannt, die einen der Ölzufuhr dienenden, den Spindelschaft abgedichtet umfassenden und gegenüber diesem undrehbar gehaltenen genuteten Ring aufweist, von dem aus Öl durch Kanäle des Spindelschaftes den Zahngelenken zuführbar ist. Weiterhin umfasst die Vorrichtung ein der Ölabfuhr dienendes, den Spindelschaft im Abstand umgebendes, undrehbares Gehäuse sowie eine Ölförderpumpe, die saugseitig bevorzugt unter Zwischenschaltung einer Kühlvorrichtung mit dem Ölauffanggehäuse und druckseitig mit dem genuteten Ring in Verbindung steht. Das Gehäuse weist im Durchtrittsbereich des Spindelschaftes Lamellenwände auf, zwischen die am Spindelschaft befindliche Lamellenringe mit Spiel labyrinthartig eingreifen.

Auch diese Anordnung verursacht einerseits beim Walzenwechsel einen vergleichsweise hohen Montageaufwand, der zu nachteilig langen Stillstandszeiten führt, und andererseits ist auch bei dieser Anordnung eine Verschmutzung des Umlauföles nicht mit letzter Sicherheit auszuschließen, weswegen nach relativ kurzen Betriebszeiten Ölwechsel erforderlich sind, oder das Umlauföl in an sich bekannter Weise unter Verwendung einer Ölzentrifuge gereinigt werden muss, was gleichfalls sehr hohe Kosten verursacht.

Die DE 37 06 577 C2 offenbart einen Walzwerksantrieb mit Zahngelenkspindeln und auf den Enden der Spindelwellen vorgesehenen, Bogenverzahnungen aufweisenden Kupplungstreffern und diese umgreifenden Innenverzahnungen der an der Spindelwelle beidendig über Stützkugeln und Druckstempel abgestützten Anschlusshülsen, sowie mit einer Ölumlaufschmierung. Bei dieser ist der zentrale Kanal mit Bohrungen sowie Ölleitungen zur Schmierung aller Reibflächen zwischen dem Kupplungstreffer und der axial verschiebbaren Führungshülse sowie den gegen die Druckstempel verlagerbaren Stützkugeln und den gegen die Innenverzahnungen verlagerbaren Bogenverzahnungen ausgestattet.

Auch bei diesem bekannten Walzwerksantrieb befinden sich die Spindelköpfe innerhalb von Ölauffanggehäusen, aus welchen der Ölrücklauf abgezogen und mittels Druckpumpe erneut in den Kreislauf aufgegeben wird.

Hierbei ergeben sich im Prinzip die gleichen Nachteile, wie bei den vorgenannten Walzwerksantrieben, nämlich eine während des Betriebes fortschreitende Verunreinigung des Öls und erschwerte Montageverhältnisse beim Walzenwechsel im Bereich der walzgerüstseitigen Spindelköpfe.

Der vorliegenden Erfindung liegt die Aufgabe zugrunde, einen gattungsgemäßen Walzwerksantrieb zu verbessern und dabei den konstruktiven und montagetechnischen Aufwand insbesondere zum Zwecke einer wesentlichen Verkürzung der Umrüstzeit bei Walzenwechsel zu minimieren und betriebsbedingte, fortschreitende Verunreinigungen des umlaufenden Öls bei möglichst großer Wärmeabfuhr sowie Temperatur-Vergleichmäßigung durch den Ölumlaufstrom zu vermeiden.

Diese Aufgabe wird durch eine Ausgestaltung des Walzwerksantriebes mit den Merkmalen des Anspruchs 1 gelöst.

Dadurch, dass jedes Zahngelenk von einem Rohr im radialen Abstand unter Ausbildung eines kreisringförmigen Ölrücklaufkanals umschlossen ist und dieses Rohr am getriebeseitigen Ende offen zum ölabfluss in das dort vorhandene Ölauffanggehäuse hineinragt, wobei der Ölrücklaufkanal über die walzgerüstseitige innenverzahnte Spindelhülse mit dem Zentralkanal in Ölumlaufverbindung steht und das Rohr walzgerüstseitig nach außen über ein darauf angeordnetes Kugelgelenk gegenüber der Spindelhülse abgedichtet ist, wird der Ölumlauf innerhalb des Antriebssystemes in Gegenrichtung zum Vorlauf im Bereich des walzgerüstseitigen Spindelkopfes umgelenkt und durch den Ölrücklaufkanal zum getriebeseitigen Spindelkopf zurückgeführt, aus welchem er bevorzugt über einen Ölkühler in die Ölförderpumpe eingeleitet und aus dieser erneut in den Kreislauf geführt wird.

Bei der erfindungsgemäßen Anordnung ergibt sich der gravierende Vorteil, dass am walzengerüstseitigen Spindelkopf kein Ölaustritt stattfindet und sich infolgedessen die Anordnung von Labyrinthdichtungen bzw. eines Ölauffanggehäuses erübrigt. Dadurch wird die Montage beim Ein- und Ausbau z. B. im Zusammenhang mit Walzenwechsel gravierend vereinfacht und somit werden die hierfür erforderlichen Umrüstzeiten drastisch verkürzt, was gleichbedeutend mit einer Produktivitätserhöhung und Kostensenkung ist. Zugleich wirkt sich diese Maßnahme auch positiv auf die Sauberhaltung des umlaufenden Ölstroms aus, weil nur noch an einer Seite des Walzwerksantriebes Labyrinthdichtungen anstelle eines stationären Ölauffanggehäuses erforderlich sind und diese daher besonders aufwendig und geschützt ausgeführt sein können. Dabei kann zum Umlauf auch ein vergleichsweise großer Ölstrom vorgesehen sein, der zur Intensivierung nicht nur der Schmierwirkung, sondern auch der Wärmeabfuhr dient und damit Voraussetzungen für eine lange und verschleißarme Verfügbarkeit des Walzantriebes schafft.

Weitere Ausgestaltungen der Erfindung sind entsprechend den Unteransprüchen vorgesehen. Einzelheiten, Merkmale und Vorteile der Erfindung ergeben sich auch aus der nachstehenden Erläuterung eines in den Zeichnungen schematisch dargestellten Ausführungsbeispieles.

Es zeigen:
- Fig. 1: einen Walzwerksantrieb mit zwei Zahngelenkspindeln, im Schnitt,
- Fig. 2: einen antriebsseitigen Teil eines Zahngelenkspindelantriebes, im Schnitt,
- Fig. 3: einen walzgerüstseitigen Teil eines Zahngelenkspindelantriebes, im Schnitt,
- Fig. 4: ein Kugelgelenk an einem Ölrückführungsrohr, in vergrößertem Maßstab, ebenfalls im Schnitt.

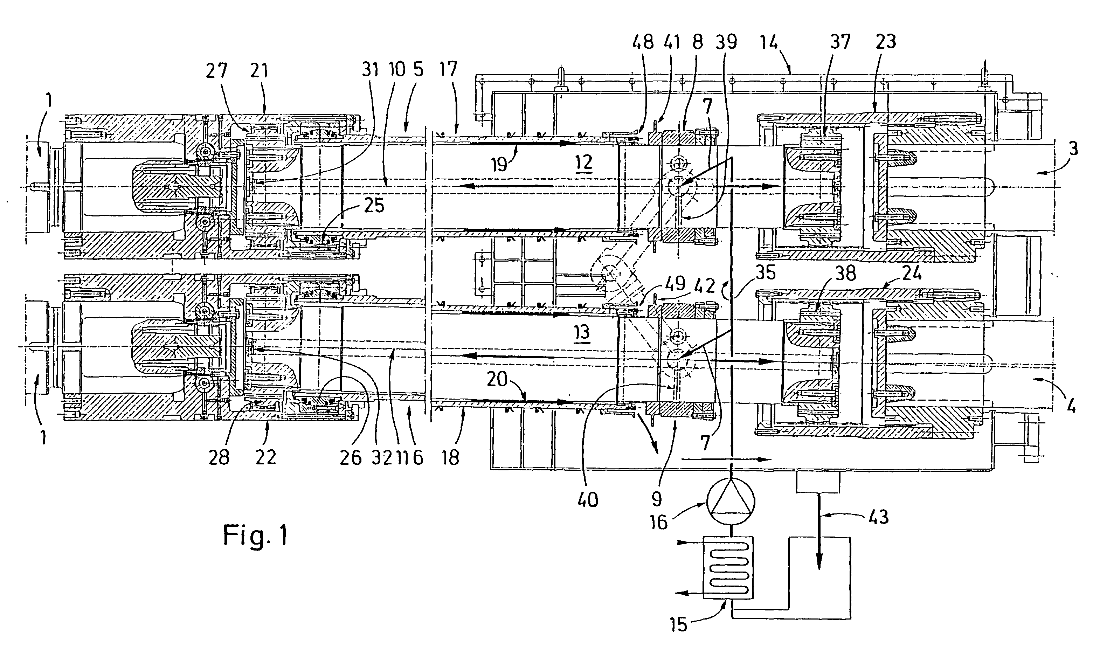

Der in Figur 1 gezeigte Walzwerksantrieb umfasst zwischen antreibbaren Walzen (1, 2) und deren Getrieben (3, 4) angeordnete, mit einer Vorrichtung für deren Umlaufschmierung versehene Zahngelenkspindeln (5, 6), die jeweils einen an eine Ölzuführung (7) anschließbaren genuteten Ölzuführungsring (8, 9) aufweisen. Von diesem aus wird Öl durch einen Zentralkanal (10, 11) des Spindelschaftes (12, 13) den Zahngelenken (27, 28) zugeführt. Weiterhin ist ein ortsfestes, der Ölabfuhr dienendes und den Spindelschaft (12, 13) im Abstand umgebendes Gehäuse (14), sowie eine druckseitig an die Ölzuführungsringe (8, 9) anschließbare, mit einem Ölkühler (15) zusammenwirkbare Ölförderpumpe (16) vorgesehen.

In erfindungsgemäßer Ausgestaltung ist jede Zahngelenkspindel (5, 6) von einem Rohr (17, 18) im radialen Abstand unter Ausbildung eines kreisringförmigen Ölrücklaufkanals (19, 20) umgeben und das Rohr (17, 18) am getriebeseitigen Ende offen, wobei es zum Ölabfluss in das dort vorhandene Ölauffanggehäuse (14) hineinragt. Der Ölrücklaufkanal (19, 20) steht über die walzgerüstseitige, innenverzahnte Spindelhülse (21, 22) mit dem Zentralkanal (10, 11) in Ölumlaufverbindung, und das Rohr (17, 18) ist walzgerüstseitig nach außen über ein darauf angeordnetes Kugelgelenk (25, 26) gegenüber der Spindelhülse (21, 22) gelenkig geführt und abgedichtet.

Der Zentralkanal (10, 11) ist durch das getriebeseitige Zahngelenk (37, 38) hindurchgeführt und endet, in die innenverzahnte Spindelhülse (23, 24) hineinragend, mit einer Drossel (29, 30). Auch am walzgerüstseitigen Ende ist der Zentralkanal (10, 11) durch das dort befindliche Zahngelenk (27, 28) hindurchgeführt und endet darin mit einer Drossel (31, 32). Diese Drosseln (29 - 32) dienen einer Vergleichmäßigung des Ölumlaufes und einer anteilmäßigen Zuteilung des Drucköles zu den jeweiligen Spindelgelenken.

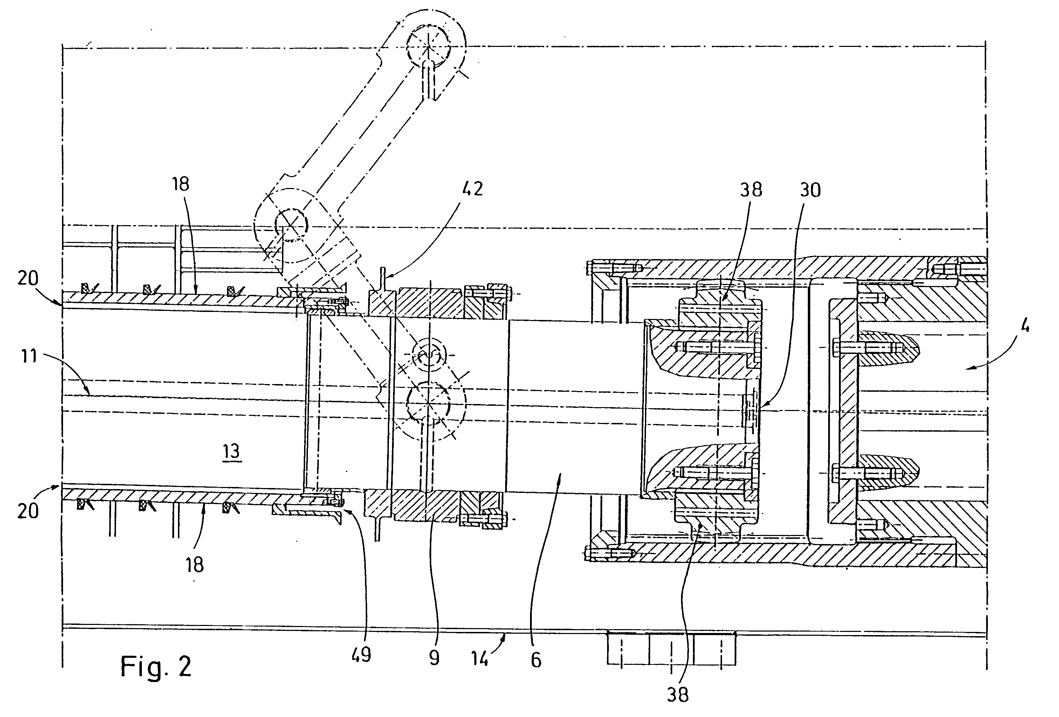

Wie hierzu aus der Zusammenschau der Figuren 1 und 2 erkennbar ist, sind bei einer Zwillingsanordnung der Zahngelenkspindeln (5, 6) die Ölzuführungsringe (8, 9) an einer gemeinsamen, der Ölzufuhr dienenden Druckleitung (35) angeschlossen, die mit der Ölpumpe (16) in Verbindung steht. Bevorzugt handelt es sich bei der Druckleitung (35) um einen flexiblen Öldruckschlauch.

Weiterhin zeigt die Zusammenschau der Figuren 1 und 2, dass die Ölzuführungsringe (8, 9) im Bereich der Spindelschäfte (12, 13) zwischen den offenen Enden (48, 49) der Ölrückführungsrohre (18, 19) und den getriebeseitigen Zahngelenken (37, 38) angeordent und deren Ölnut über je einen Radialkanal (39, 40) mit dem Zentralkanal (10, 11) verbunden ist. Auch ist auf jedem Spindelschaft (12, 13) zwischen dem Ölzufuhrring (8, 9) und dem offenen Ende (48, 49) des Ölrückführungsrohres (17, 18) ein Ölschleuderring (41, 42) angeordnet.

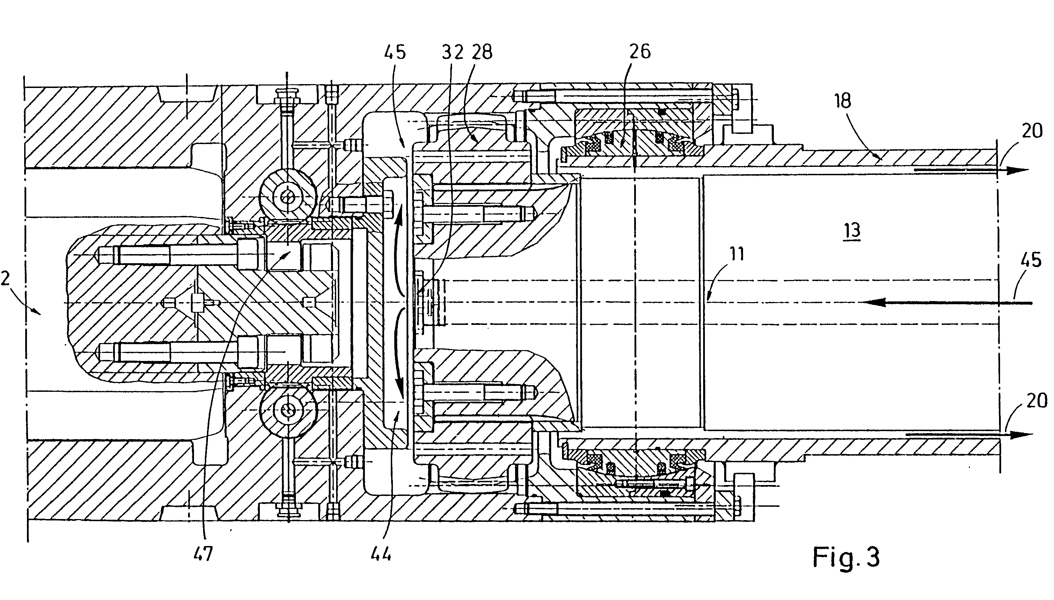

Rücklauföl tritt aus dem Ölauffanggehäuse (14) im unteren Bereich an einem dort befindlichen Stutzen mit der Leitung (43) aus und fließt zunächst in einen Sammelbehälter, aus dem es im Rücklauf durch den Ölkühler (15) in die Ölförderpumpe (16) gelangt, welche mit der Druckleitung (35) Öl wieder in das Antriebssystem zurückpumpt. Von dort verteilt sich der Ölfluss in die beiden Zentralkanäle (10, 11) und fließt in Richtung des darin eingezeichneten Richtungspfeiles zunächst in die walzenseitigen Zahngelenke (27, 28) und über die darin vorhandenen Sammelräume (44, 45) und durch das Zahngelenk (27, 28) infolge der Abdichtung der Ölrückführungsrohre (17, 18) durch das Kugelgelenk (25, 26) zwangsweise in die gegenüber den Spindelhülsen (21, 22) zwischen den Ölrückführungsrohren (17, 18) und den Spindelschäften (12, 13) ausgebildeten Ölrücklaufkanäle (19, 20), wie dies insbesondere auch aus Figur 3 ersichtlich ist.

Dabei zeigt die Figur 1, dass ein weiterer Teilstrom von Öl über die Zentralkanäle (10, 11) in die getriebeseitigen Zahngelenke (37, 38) durch die Drosseln (29, 30) hindurchtritt und aus diesen offen in das Auffanggehäuse (14) austritt, wobei die Zahngelenke (37, 38) ausreichend geschmiert werden und Reibungswärme abgeführt wird. Vorteilhaft müssen die Zahngelenke (37, 38) gegenüber Ölaustritt, der hier ja erwünscht ist, nicht mit Dichtmitteln abgeschottet werden.

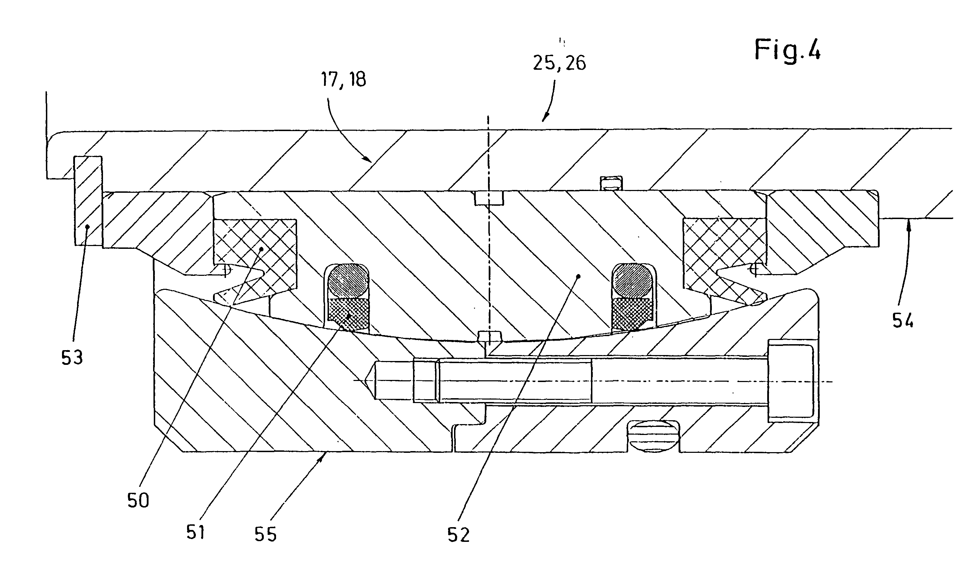

Figur 4 zeigt im Schnitt die Ausbildung eines Kugelgelenkes (25, 26) in Anordnung auf einem Ölrückführungsrohr (17, 18). Es besitzt einen kugelförmigen Grundkörper (52), der zwischen einer Schulter (54) des Rohres (17, 18) und einem Anschlagring (53) axial eingespannt ist. Dieser ist in eine hohlkugelförmige, zweiteilige Aufnahmeschale (55) eingespannt und relativ zu dieser durch elastische Dichtungen (50, 51) hermetisch abgedichtet.

Der Walzwerksantrieb ist nicht streng an das gezeigte Beispiel gebunden. So kann z. B. anstelle des Ölrücklaufs an der Getriebeseite durch die dort offenen Rohre (17, 18) in ein feststehendes Ölauffanggehäuse (14) eine alternative Anordnung getroffen sein, bei der unter Wegfall dieses Gehäuses (14) die Rohre (17, 18) an ihren Enden verschlossen und von abgedichtet anliegenden Ölabfuhrringen umgeben sind, welchen das Rücklauföl durch radiale Kanäle der Rohre (17, 18) zugeleitet wird, und die ihrerseits an Ölabfuhrleitungen undrehbar angeschlossen sind.

Der Walzwerksantrieb nach der Erfindung ist unkompliziert und von robuster Bauart und löst in optimaler Weise die eingangs gestellte Aufgabe.

## Patentansprüche

1. Walzwerksantrieb mit zwischen antreibbaren Walzen (1, 2) und deren Getrieben (3, 4) angeordneten, mit einer Vorrichtung für deren Umlaufschmierung versehenen Zahngelenkspindeln (5, 6), die jeweils einen an eine Ölzuführung (7) anschließbaren genuteten Ölzuführungsring (8, 9) aufweisen, von dem aus Öl durch einen Zentralkanal (10, 11) des Spindelschaftes (12, 13) den Zahngelenken (27, 28) zuführbar ist, sowie mit einem ortsfesten, der Ölabfuhr dienenden und den Spindelschaft (12, 13) im Abstand umgebenden Gehäuse (14) und mit einer druckseitig an die Ölzuführungsringe (8, 9) anschließbaren, mit einem Ölkühler (15) zusammenwirkbaren Ölförderpumpe (16), **dadurch gekennzeichnet, dass** jede Zahngelenkspindel (5, 6) von einem Rohr (17, 18) im radialen Abstand unter Ausbildung eines kreisringförmigen Ölrücklaufkanals (19, 20) umschlossen ist, dass das Rohr (17, 18) am getriebeseitigen Ende offen ist und zum Ölabfluss in das dort vorhandene Ölauffanggehäuse (14) hineinragt, und dass der Ölrücklaufkanal (19, 20) über die walzgerüstseitige, innenverzahnte Spindelhülse (21, 22) mit dem Zentralkanal (10, 11) in Ölumlaufverbindung steht, sowie, dass das Rohr (17, 18) walzgerüstseitig nach außen über ein darauf angeordnetes Kugelgelenk (25, 26) gegenüber der Spindelhülse (21, 22) gelenkig geführt und abgedichtet ist.

2. Walzwerksantrieb nach Anspruch 1, **dadurch gekennzeichnet, dass** der Zentralkanal (10, 11) durch das getriebeseitige Zahngelenk (37, 38) hindurchgeführt ist und in die innenverzahnte Spindelhülse (23, 24) hineinragend mit einer Drossel (29, 30) endet.

3. Walzwerksantrieb nach Anspruch 1 oder 2, **dadurch gekennzeichnet, dass** der Zentralkanal (10, 11) am walzgerüstseitigen Ende durch das dort befindliche Zahngelenk (27, 28) hindurchgeführt ist und darin mit einer Drossel (31, 32) endet.

4. Walzwerksantrieb nach einem der Ansprüche 1 bis 3, **dadurch gekennzeichnet, dass** bei einer Zwillingsanordnung der Zahngelenkspindeln (5, 6) die Ölzuführungsringe (8, 9) über eine gemeinsame, der Ölzufuhr dienende Druckleitung (35) mit der Ölpumpe (16) in Verbindung steht.

5. Walzwerksantrieb nach einem der Ansprüche 1 bis 4, **dadurch gekennzeichnet, dass** die Ölzuführungsringe (8, 9) im Bereich der Spindelschäfte (12, 13) zwischen den offenen Enden (48, 49) der Ölrückführrohre (18, 19) und den getriebeseitigen Zahngelenken (37, 38) angeordnet sind und deren Ölnut über je einen Radialkanal (39, 40) mit dem Zentralkanal (10, 11) verbunden ist.

6. Walzwerksantrieb nach einem der Ansprüche 1 bis 5, **dadurch gekennzeichnet, dass** auf jedem Spindelschaft (12, 13) zwischen dem Ölzufuhrring (8, 9) und dem offenen Ende (48, 49) des Ölrückführungsrohres (17, 18) ein Ölschleuderring (41, 42) angeordnet ist.

## Claims

1. Rolling mill drive with toothed joint spindles (5, 6) which are arranged between drivable rollers (1, 2) and the transmissions (3, 4) thereof and provided with a device for circulatory lubrication thereof and which each have a respective grooved oil feed ring (8, 9), which is connectible to an oil feed (7) and from which oil can be fed through a central channel (10, 11) of the spindle shank (12, 13) to the toothed joints (27, 28), and with a stationary housing (14), which serves for oil discharge and surrounds the spindle shank (12, 13) at a spacing, and an oil conveying pump (16) connectible at the pressure side with the oil feed rings (8, 9) and co-operable with an oil cooler (15), **characterised in that** each toothed joint spindle (5, 6) is surrounded at a radial spacing by a tube (17, 18) with formation of a circularly annular oil return channel (19, 20), that the tube (17, 18) is open at the end at the transmission side and, for oil outflow, projects into the oil collecting housing (14) present there, that the oil return channel (19, 20) is in oil circulatory connection with the central channel (10, 11) by way of the internally toothed spindle sleeve (21, 22) at the roll stand side, and that at the roll stand side the tube (17, 18) is pivotably guided outwardly and sealed relative to the spindle sleeve (21, 22) by way of a ball joint (25, 26) arranged on the tube.

2. Rolling mill drive according to claim 1, **characterised in that** the central channel (10, 11) is led through the toothed joint (37, 38) at the transmission side and ends projecting by a throttle (29, 30) in the internally toothed spindle sleeve (23, 24).

3. Rolling mill drive according to claim 1 or 2, **characterised in that** the central channel (10, 11) is led at the end at the roll stand side through the toothed joint (27, 28) disposed there and ends therein by a throttle (31, 32).

4. Rolling mill drive according to one of claims 1 to 3, **characterised in that** in the case of a double arrangement of the toothed joint spindles (5, 6) the oil feed rings (8, 9) are connected with the oil pump (16) by way of a common pressure duct (35) serving for the oil feed.

5. Rolling mill drive according to one of claims 1 to 4, **characterised in that** the oil feed rings (8, 9) are arranged in the region of the spindle shanks (12, 13) between the open ends (48, 49) of the oil return tubes (18, 19) and the toothed joints (37, 38) at the transmission side, and the oil groove of each ring is connected with the central channel (10, 11) by way of a respective radial channel (39, 40).

6. Rolling mill drive according to one of claims 1 to 5, **characterised in that** an oil thrower ring (41, 42) is arranged on each spindle shank (12, 13) between the oil feed ring (8, 9) and the open end (48, 49) of the oil return tube (17, 18).

## Revendications

1. Entraînement de laminoir présentant des broches articulées dentées (5, 6) disposées entre des cylindres (1, 2) pouvant être entraînés et leurs dispositifs d'entraînement (3, 4), pourvues d'un dispositif pour la lubrification par circulation, qui présentent à chaque fois une bague d'alimentation d'huile (8, 9) rainurée pouvant être raccordée à une alimentation en huile (7), à partir de laquelle de l'huile peut être alimentée via un canal central (10, 11) de la tige (12, 13) de la broche de l'articulation dentée (27, 28), ainsi qu'un carter (14) fixe, servant à l'évacuation de l'huile et entourant la tige (12, 13) de la broche à une certaine distance et une pompe d'alimentation d'huile (16) pouvant être raccordée côté pression aux bagues (8, 9) d'alimentation en huile, interagissant avec un refroidisseur d'huile (15), **caractérisé en ce que** chaque broche articulée dentée (5, 6) est entourée d'un tube (17, 18) à une certaine distance radiale en formant un canal de retour d'huile (19, 20) circulaire, **en ce que** ce tube (17, 18) est ouvert du côté de l'entraînement et pénètre à des fins d'écoulement d'huile dans le carter de récupération d'huile (14) qui y est présent et **en ce que** le canal de retour d'huile (19, 20) est raccordé par circulation d'huile avec le canal central (10, 11) via le manchon (21, 22), denté à l'intérieur, de la broche du côté de la cage de laminoir, et **en ce que** le tube (17, 18) est guidé de manière articulée par rapport au manchon (21, 22) de broche du côté de la cage de laminage vers l'extérieur via une articulation à bille (25, 26) qui y est disposée et est fermé.

2. Entraînement de laminoir selon la revendication 1, **caractérisé en ce que** le canal central (10, 11) est passé à travers l'articulation dentée (37, 38) du côté de l'entraînement et se termine par un étranglement (29, 30) en pénétrant dans le manchon (23, 24) denté à l'intérieur de la broche.

3. Entraînement de laminoir selon la revendication 1 ou 2, **caractérisé en ce que** le canal central (10, 11) est passé en l'extrémité du côté de la cage de laminage à travers l'articulation dentée (27, 28) qui s'y trouve et se termine dans celle-ci par un étranglement (31, 32).

4. Entraînement de laminoir selon l'une quelconque des revendications 1 à 3, **caractérisé en ce que** dans le cas d'une disposition jumelée des broches à articulation dentée (5, 6), les bagues d'alimentation d'huile (8, 9) sont reliées via une conduite sous pression (35) commune servant à l'alimentation en huile avec la pompe à huile (16).

5. Entraînement de laminoir selon l'une quelconque des revendications 1 à 4, **caractérisé en ce que** les bagues d'alimentation d'huile (8, 9) sont disposées au niveau des tiges (12, 13) des broches entre les extrémités ouvertes (48, 49) des tuyaux de retour d'huile (18, 19) et les articulations dentées (37, 38) du côte de l'entrainement et leur rainure d'huile est reliée via à chaque fois un canal radial (39, 40) avec le canal central (10,11).

6. Entraînement de laminoir selon l'une quelconque des revendications 1 à 5, **caractérisé en ce qu'**on a disposé sur chaque tige de broche (12, 13) entre la bague d'alimentation d'huile (8, 9) et l'extrémité ouverte (48, 49) du tuyau de retour d'huile (17, 18) un collet de barbotage (41, 42).
